# EUROPEAN PATENT SPECIFICATION

(11) **EP 2 534 447 B1**
(45) Date of publication and mention of the grant of the patent: **01.04.2020**
(21) Application number: 10845886.0
(22) Date of filing: 12.02.2010
(51) Int. Cl.: G01C 23/00, G06F 3/048, G06F 13/38, G06F 3/14, G06F 3/147

(54) **A VEHICULAR DISPLAY SYSTEM AND A METHOD FOR CONTROLLING THE DISPLAY SYSTEM**
ANZEIGESYSTEM FÜR EIN FAHRZEUG UND VERFAHREN ZUR STEUERUNG DES ANZEIGESYSTEMS
SYSTÈME D'AFFICHAGE VÉHICULAIRE ET PROCÉDÉ DE COMMANDE DU SYSTÈME D'AFFICHAGE

(43) Date of publication of application: 19.12.2012
(73) Proprietor: Saab AB, 581 88 Linköping (SE)
(72) Inventor: DANIELSSON, Torkel, 587 52 Linköping (SE); PETTERSSON, Anders, 583 37 Linköping (SE); HÅKEGÅRD, Jan, 583 33 Linköping (SE)
(74) Representative: Zacco Sweden AB
(86) International application number: PCT/SE2010/050169
(87) International publication number: WO 2011/099905

(56) References cited:
- EP-A2- 2 072 955
- US-A1- 2006 164 261
- US-A1- 2008 119 969
- US-A1- 2008 119 969
- US-A1- 2008 195 966
- US-A1- 2008 195 966
- US-A1- 2009 045 981
- US-A1- 2009 045 981
- US-A1- 2009 157 703
- LEFEBVRE Y: "Understanding ARINC 661 and the benefits of 661-based development tools", INTERNET CITATION, 27 June 2008 (2008-06-27), pages 1-20, XP002659657, Retrieved from the Internet: URL:http://www.presagis.com/files/whitepap ers/2006-06-WP-Arinc661-XT.pdf [retrieved on 2011-09-19]

## Description

### Technical field

The present invention relates to a system and a method for controlling avionics.

Furthermore, the invention relates to software adapted to perform steps of the control method when executed on a computer.

### Background of the Invention

In control systems of today, developments in digital technology have enabled complex functionality. However as a direct result from the development, the need of additional system capacity and functionality provided by software and various components such as sensors, processors, display units, data buses and memory units is increasing.

Real-time systems for critical control applications, wherein typically data from sensor/s are acquired, communicated and processed to provide a control signal to an actuator pose strict demands regarding bandwidth, data delivery time, redundancy, fail-safety and integrity. Failure to meet one or several of these demands can in applications including "brake-by-wire" or "steer-by-wire" prove potentially dangerous.

One such area wherein reliable high-speed real-time execution and communication of data is of outmost importance is within avionics systems. Advances in technology during late 1960 and early 1970 made it necessary to share information between different avionics subsystems in order to reduce the number of functional modules. A single sensor such as a position sensor provided information to weapon systems, display system, autopilot and navigation system.

The possibilities gained by the development within the field of computer technology have also increased the amount of processed data available to a pilot containing situation awareness information, relevant for decision making. This in combination with presentation of flight critical data, related to for example navigation, adds to the number of interactive presentations that are necessary and/or desired to provide in a cockpit display system.

Typically avionics subsystems, such as sensors, actuators, controllers and display units communicate with each other using standardized communication protocols. The commercial Aeronautical Radio Inc. (ARINC) 661, specification is a civil protocol standard for the definition of a cockpit display system and its communication with a client system arranged to manage avionics functions. Each independent client system is provided with a separate layer of a display surface. The protocol provides a safe implementation for several independent client systems to simultaneously present data on a single display surface of display system. Furthermore implementation of the ARINC 661 facilitates software certification in accordance with the Radio Technical Commission for Aeronautics (RTCA) DO-178B guidance document. Software re-certification resulting from system modifications such as additions of new client systems or modifications to the existing client systems is also facilitated.

Document US2009045981 A1 discloses a method and system for controlling data transmissions such as ARINC 661 data between at least one display and a remote client system in an avionic system.

However, the display systems according to prior art tends to require complex programming in order to provide for client systems interfacing and interacting with multiple display surfaces.

Accordingly, there is a need to present improvements in the art of avionics and displays.

### Objective of the Invention

It is therefore an objective of the present invention to provide a system, a method and a computer program performing said method, that are less demanding to implement and which are improving flexibility in regard of interfaces between an operator and avionics.

### Summary of the Invention

This objective is achieved according to the present invention by a vehicular control system. The present invention is defined in the appended set of claims. The system comprises display means each comprising a physical display unit and memory means comprising information related to descriptions of a plurality of displayable entities and first configuration data, associated to a first control module, said first configuration data comprising information on configuration of the displayable entities, based on references to the descriptions of the plurality of displayable entities. The system comprises a plurality of display means , the memory means of each display means is provided with a copy of the first configuration data, the first control module is arranged to transmit data based on point-to-multipoint communication to each of the plurality of display means, the plurality of display means each comprises processing means operatively coupled to said memory means, said processing means arranged to process the entities based on received data from the first control module , and to present the result of the processing on the physical display unit of each of the display means.
By this is achieved a system were symbolic provided by the displayable entities can be placed on any number of physical display units with a minimal amount of configuration of the displayable entities. For example, the same symbolic provided by a single portion of configuration data and an associated control module may be placed on a physical display unit located in a cockpit associated to a rear seat and a front seat of a two seated aerial vehicle.
Another beneficial contribution is that the amount of work programming a client system for a control system comprising a plurality of physical display surfaces is reduced, since there is no need for implementing separate control for each of a plurality of physical display surfaces. Furthermore, the client systems may be implemented with less complexity.

The system is in further characterized in that the memory means of each display means is further provided with a copy of at least second configuration data, associated to at least a second control module and the processing means of each display means further are optionally arranged to superposition the entities, associated by the first and the at least second configuration data respectively with the first and the at least second control module, on basis of predetermined hierarchical parameters associated to the first and the at least second configuration data.
By this is achieved a system that enables several different display configurations associated to different control modules to co-exist in a single display means and on a single physical display unit.

The system is in one option further characterized in that it comprises user input means, allowing a user to interact with the system.
By this is achieved a system that allows an operator of the system to monitor and control various functions of the system by providing commands affecting functions associated to at least one control module. The control module is further operable to control functions associated to a flight management computer.

The system is in one option further characterized in that it comprises interaction control means arranged to receive user inputs related to at least one of the entities and to forward the user inputs to the respective control module associated to the respective entity based on the first and second configuration data.
By this is achieved a system that allows an operator of the system to interact with the system through a displayable entity associated to a control module irrespectively of the number of physical display units and irrespectively on which of the physical display unit said displayable entity is located.

The system is further characterized in that it comprises display content control means arranged to detect the first and at least second configuration data available to the plurality of display means and display mode selection means arranged to provide an operator of the system with means to activate or deactivate visualization associated to each of the available configuration data, in each of the plurality of display means.

By this is achieved a system that automatically can detect a number of available display configurations. In addition an operator of the system is provided with means during system run-time to choose desired display contents from the set of detected available display configurations.

Although the possibilities to display large amounts of data in modern display systems nowadays have increased, the implementation of a user modifiable system is not unessential, since the amount of data available to the operator could be very large which in turn affects the time of the decision process and thereby also the effectiveness of the avionics control system.

The system is in one option further characterized in that it comprises an emergency mode arranged to modify at least one display means, in order to present entities related to a minimum set of flight control surfaces and/or supervision functions required for continued vehicular operation.

By this is achieved a system that may support continued operation in case of a malfunction in the display means and/or in its associated functions.

The system is in one option further characterized in that the system is conformant with ARINC 661 specifications.

By this is achieved a system is able benefit from the ARINC 661 specifications and in addition that display content upon selection can be placed on a physical display means of choice of any number of physical display units comprised in the system.

This objective is also achieved according to the present invention by a method for controlling a vehicular system according to claim 7.

The dependent claims define optional characterizing features corresponding to those described in relation to the system.

This objective is also achieved by a computer program comprising a program code for performing the above described method steps, when said computer program is run on a computer.

This objective is also achieved by a computer program product comprising a program code stored on a computer readable media for performing the above described method steps, when said computer program is run on the computer.

### Brief Description of the Drawings

Fig.1. shows schematically a block diagram of an avionics control system according to an example of the present invention.
Fig.2. shows schematically a block diagram of an avionics control system according to an example of the present invention.
Fig.3. shows a flow diagram of a method for controlling avionics according to an example of the present invention.

### Detailed Description

The following examples relates to the case where the control system is described with reference to aerial vehicles. However, various different applications are possible, e.g. for use in land, sea or space vehicles.

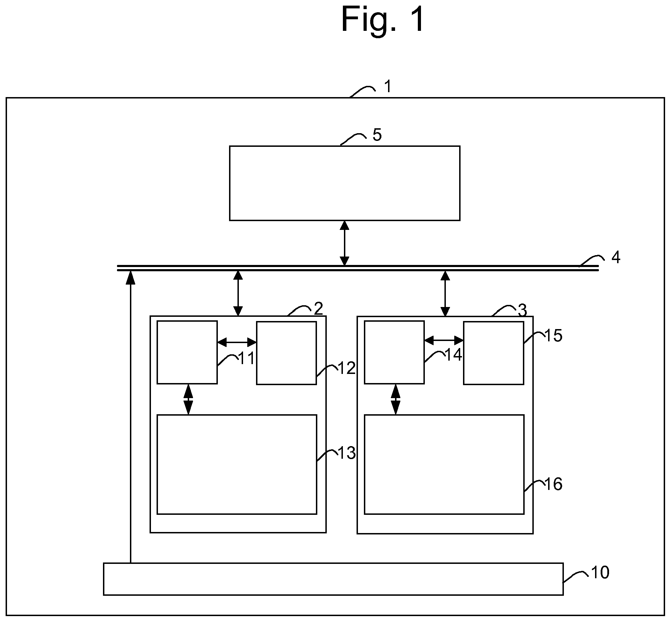

With reference to the drawings and initially to **fig. 1** an avionics control system **1,** adapted to be mounted in an aerial vehicle is provided. The avionics control system **1** comprises flight displays **2, 3** arranged to provide means for at least one operator of said avionics control system **1** to interact with the system, in order to supervise and control the operation of the aerial vehicle.

In the shown example with reference to **fig. 1** the avionics control system **1** comprises two flight displays **2, 3,** such as two multi functional display units (MFDU:s). Each of the flight displays **2, 3** may comprise at least one processing device **11, 14** arranged to process data, received via a communication bus **4.** The processing of the received data can be based on configuration data stored in a memory **12, 15,** coupled to the processing device **11, 14.** The communication bus **4** may be bi-directional and based on protocols such as the Institute of Electrical and Electronics Engineers (IEEE) Ethernet, IEEE 1394 Firewire, MIL-STD-1553, ARINC 664, ARINC 429, other protocols known in the art or any combination thereof. The received data may be data transmitted from at least one flight control computer (FCC) **5** arranged to control functions of the aerial vehicle such as propulsion, flight controls, payload, hydraulics and power. The received data may be related to properties of displayable entities. The received data may comprise for example a parameter associated to a sensor reading, position of an actuator and/or a position received by an ADS-B transponder.

Thus, each processing device is arranged to process the received data based on the configuration data stored in the memory **12, 15,** so as to instantiate displayable entities. Further, each processing device is in one example arranged to modify properties associated to the displayable entities on basis of the received data.

The displayable entities may be a number of predefined graphical elements, and/or grouping elements. The displayable entities may further be static, dynamic and/or interactive. Examples of displayable entities may be lines, arcs, rectangles, containers and pushbuttons. The interactive displayable entities may comprise a plurality of internal states such as in the case of the pushbutton which may comprise several graphically different states related to the when the button is in idle state, subjected to a marker passing such as a mouse-over or engaged by said marker.

As an example, a composition of the displayable entities may form a graphical representation of an altitude meter. The graphical representation of the altitude meter may comprise a plurality of graphical objects such as a circle with a plurality of evenly distributed ticks, each crossing the circle perpendicularly and associated numbering, providing an altitude scale. A pointer may be arranged to point from the centre of the circle to the current altitude provided by received data in accordance with the scale. The property of the above defined displayable entity may be related to altitude, provided from the FCC **5,** which may be arranged to perform subsequent sensor readings of current altitude. Other properties of the displayable entities may be related to colouring, size and positioning.

The FCC **5** may be arranged to provide data via the communication bus **4** at a periodic basis and/or based on detected events, such as event relating to when subsequent data exceed predetermined thresholds.

The communication bus **4,** may in one example be a switched Ethernet network. The switched Ethernet network may comprise one or more data switches. The topology of the Ethernet network may for example be a dual redundant topology comprising two data switches and thereby also comprise two independent data paths along which data may be communicated to each device attached to the network.

In one example the communication bus **4** may be a switched Ethernet network arranged in broadcast mode, based on implementing broadcast address.

In one example the communication bus **4** may be a switched Ethernet network arranged in point-to-multipoint mode based on implementing at least one multicast address.

The configuration data stored in the memory **12, 15** comprises predetermined information relating to predetermined display content, configuration of the display content and information relating to a communication protocol. The configuration data may further comprise information related to information for interpretation of the received data such as a rendering engine. In one example the rendering may be based on OpenGL.

The flight displays **2, 3** may further each comprise at least one physical display surface **13, 16** in operable connection with the respective processing device **11, 14,** The display surface **13, 16** is for example a liquid crystal display (LCD), organic light emitting diode (OLED), cathode ray tube (CRT) or any combination thereof.

In one example the physical display surface **13, 16** may depending on intended use and/or physical properties be configured as a head mounted display (HMD), head down display (HDD), head up display (HUD), side display (SD), data link control display unit (DCDU) or any combination thereof.

In one example the flight displays **2, 3** comprising the physical display surfaces **13, 16** may be arranged in a vehicle control station such as in a cockpit of the aerial vehicle.

In another example one flight display **2** may be arranged in a front cockpit and the other flight display **3** may be arranged in a rear cockpit of a two seated aerial vehicle.

The flight displays **2, 3** are further configured to receive user inputs via the communication bus **4** from an operator of the avionics control system by means of at least one user interface **10.** The user interface is for example at least one keyboard, mouse, joystick, trackball or rotary knob or a combination thereof. The physical display surfaces **13, 16** may further comprise a resistive or capacitive touch screen layer to enable user interactions.

The flight displays **2, 3** may further be arranged to forward received user inputs to the FCC **5,** in order for the FCC **5** to respond to user inputs. As an example the operator may detect that a parameter associated with a sensor reading of a specific engine component exceeds a predetermined temperature threshold and respond accordingly, by providing a command counteracting the condition. The counteracting command comprises for example providing an actuator of an engine cooling system with a command to increase cooling efficiency.

In one example the flight displays **2, 3** may be assigned to visualising either a primary flight display (PFD) or a Navigation display (ND). The PFD may be arranged to visualize indicators relating to characteristics of the aerial vehicle hosting the control system **1,** such as for example air speed, attitude, altitude and/or magnetic heading. The ND may be arranged to visualize indicators relating to characteristics of the aerial vehicle hosting the control system **1,** such as for example map, flight path and other aerial vehicles detected in the surrounding air space.

In another example at least one of the flight displays **2, 3** may be assigned to simultaneously visualising both a PFD and a ND.

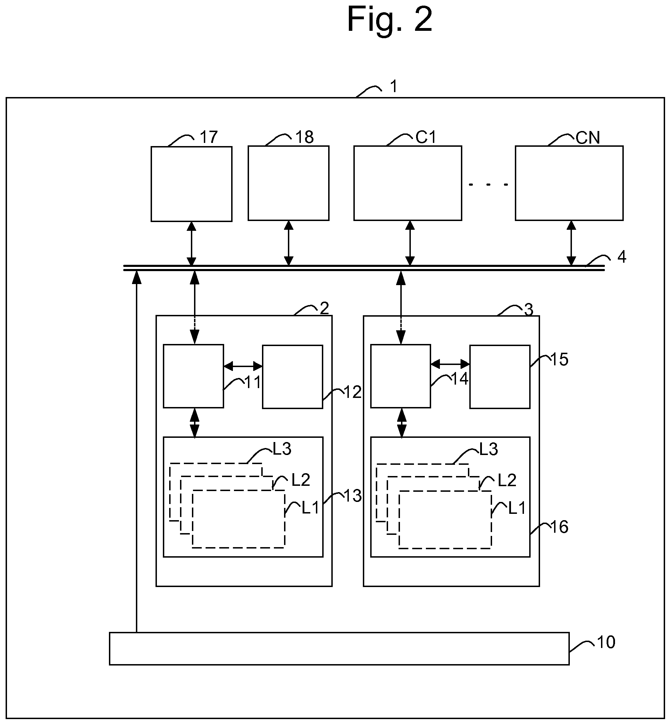

In one example explained with reference to **fig. 2****,** the processing devices **11, 14** of the control system **1** may be arranged to process a predetermined library of displayable entities and a number of configuration files, also referred to as definition files, stored in the memory **12, 15.** The predetermined library of displayable entities may comprise a predetermined list of displayable entities with associated descriptions relating to graphic appearance and behaviour. The definition files may each comprise configuration information relating to a selection of displayable entities to instantiate with associated initial properties. Each of the definition files may comprise information describing the displayable entities, constituting each of a set of layers **L1-L3,** displayable in the physical display surfaces **13, 16** of the flight displays **2, 3.** By processing the definition files, a set of layers **L1-L3** each comprising one or more specific instances of the displayable entities may be provided in each of the physical display surfaces **13, 16.** A number of client systems **C1-CN** may be arranged to handle the logic of the displayable entities. The handling of the logic may comprise determining and providing the parameters associated to the properties of the instantiated displayable entities during system run-time. As an example one or more of the client systems **C1-CN** may be arranged to provide one or more of the instantiated displayable entities with properties related to sensor readings or positions of actuators. As an example, the logic of one of the client systems **C1-CN** may be arranged to alter colour of one of its associated instantiated displayable entities upon detection of an intruding aerial vehicle breaching a proximity threshold. Each of the number of client system **C1-CN** may be associated to one or more of the layers **L1-L3.** Each of the layers **L1-L3** may be associated to one of the client systems **C1-CN.**

It is to be understood that the exemplified number of layers **L1-L3,** available to the system **1** is by no means limited to three. The system **1** may as well comprise at least as many of the layers as the corresponding number of available client systems **C1-CN,** determined to have a need for displaying information.

In one example each of the client systems **C1-CN** may be arranged to transmit data to the flight displays **2, 3,** using point-to multipoint communication wherein said data may be related to the properties of the instantiated displayable entities. The client systems **C1-CN** may be implemented in software and hosted on one or more avionics computers such as the FCC **5.**

By transmitting data based point-to-multipoint i.e. multicasting data to the flight displays **2, 3** associated to properties of the displayable entities associated to the respective layers **L1-L3,** the operation of adding one or several flight displays **2, 3** to the control system **1** is simply to provide the predetermined library of displayable entities and duplicates of the pre-existing definition files to the memory of the additional one or more flight displays. Hence, there is no need for modifications of the existing client systems **C1-CN** in connection to adding additional flight displays **2, 3** to the existing system **1.**

In one example the definition files may be created using the format extensible mark-up language (XML), on basis of the ARINC 661 specifications. The definition files may further be compiled from the XML format to binary and subsequently uploaded to the memory **12, 15** of the flight display **2, 3.**

In one example the predetermined library of displayable entities may be based on the widget library as defined by the ARINC 661 specifications.

In one example the definitions of the client systems **C1-CN** may be based on user applications (UA) as defined by the ARINC 661 specifications.

In one example a display server can be provided in the control system **1.** The display server may provide a set of services related to handling of user input data, instantiating displayable entities and handling of hierarchy of the displayable entities on basis of the configuration data. The display server may be implemented in software executed on the processing devices **11, 14** of the flight displays **2, 3.** The operating instructions for the display server may be provided by information stored on the memory **12, 15.**

In one example with reference to **fig. 2** a mode control unit **17** is provided in the avionics control system **1.** The mode control unit **17** is arranged to receive data messages related to user inputs. In response to specific user inputs the mode control unit **17** can be arranged to transmit a data message to a display server, related to controlling a visibility parameter associated to the respective layers **L1-L3.** The mode control unit **17** may be a centralized unit implemented in software as a user application. The mode control unit **17** may further be adapted to the ARINC 661 specification.

As an example a first **2** and a second flight display **3** may be configured to each display a set of three stacked i.e. super positioned layers **L1-L3.** A first layer **L1** and a second layer **L2** of the set of stacked layers **L1-L3,** may be associated to one or more of the displayable entities, forming a PFD. A third layer **L3** may be associated to one or a composition of the displayable entities constituting a ND. The second layer **L2** may be assigned with a background fill colour. The order of visibility of the layers may be hierarchically defined from **L1-L3.** The parameters referring to hierarchically defined order of visibility/relative visibility between layers may be statically specified in the respective definition file associated to the respective layer **L1-L3.** Apart from the order of visibility, each layer **L1-L3** may comprise a parameter associated to absolute visibility, with selectable values TRUE or FALSE. Thus, with the visibility parameter set to TRUE on all the layers **L1-L3,** only the PFD will be visible to the operator and the ND will not be seen. By providing a user input associated to the mode control unit **17,** for example by using the keyboard device **10,** the mode control unit **17** may in response be arranged to transmit a message, informing a display server associated to the first flight display **2** to set the visibility parameter of the first **L1** and second **L2** layers to FALSE. By manipulating the visibility of the first **L1** and second **L2** layers, only the ND and not the PFD will be seen by the operator in the first flight display **2.**

In one example the at least one operator is provided with a predetermined selection of display modes. The selection of predetermined display modes may be preconfigured by means of arranging instances of displayable entities associated to the stacked layers **L1-L3** into one or more of a plurality of portions. The plurality of portions may correspond to different display areas within the respective physical display surface **13, 16.** Thus, by positioning instances of displayable entities from more than one of the layers into the same portion, the visibility of the instances of displayable entities may be controlled locally within each portion by means of the absolute visibility associated to each layer.

The portions may in one example correspond to rectangular portions of the physical display surface. Each of the portions may further be divided into a plurality of sub portions.

As an example the instances of displayable entities associated with a first client system **C1**, through the respective definition file to the first layer **L1** may be assigned to a first portion of the first layer **L1** corresponding to a first portion of the physical display surface **13, 16.** The first portion may correspond to a display area covering the lower half of the available display surface of the respective physical display surface **13, 16.** The instances of displayable entities associated with a second client system **C2,** through the respective definition file to the second layer **L2** may be assigned to a second portion of the second layer **L2** corresponding to a second portion of the physical display surface **13, 16.** The second portion may correspond to a display area covering the upper half of the available display surface of the respective physical display surface **13, 16.** The instances of displayable entities associated with a third client system **C3,** through the respective definition file to the third layer **L3** may also be assigned to the second portion of the third layer **L3** corresponding to the said second portion of the physical display surface **13, 16.** Thus, the instances of the displayable objects associated to the second and third layer **L2, L3** overlap in the second portion of the respective physical display surface **13, 16.** The visibility of the instances associated to the second and third layer **L2, L3** is then in default mode controlled by the hierarchy parameters defining order of visibility associated to the respective layer and may subsequently be modified by controlling the absolute visibility of each of the respective overlapping layers. The instances associated to the first layer **L1** does not affect the visibility or become affected by modifications of the visibility associated to either of the second and/or third layer **L2, L3,** due to being positioned in another display portion namely the first portion.

Accordingly, the at least one operator will be given the predetermined selection of display modes comprising a first and a second display mode. The first display mode corresponding to visualize the instances of displayable entities associated to the first layer **L1** in the first portion and to visualize the instances of displayable entities associated to the second layer **L2** in the second portion. The second display mode corresponding to visualize the instances of displayable entities associated to the first layer **L1** in the first portion and to visualize the instances of displayable entities associated to the third layer **L3** in the second portion. The desired display configuration may then be selected by means of the input device.

It is to be noted that the number of different display portions may differ from the example above. The number of different layers **L1-L3** with associated instances of displayable entities designated to be positioned in each portion may further vary.

In one example the at least one operator is provided dynamic selection of display modes. As an example the dynamic selection may implemented by means of that the displayable entities of each layer may be assigned to a dynamic portion of the layer corresponding to a dynamic portion of the physical display surface **13, 16.** The term dynamic refers herein to that the position and/or size of the portion may be modified during system run-time such as by means of the operator interacting with the system using the input device **10.** By use of the dynamic portion the at least one operator may be given the selection of which of the available display content is to be presented where and on which of the available physical display surfaces **13, 16.**

In one example the at least one operator is provided with a selection where at least one dedicated portion of the available physical display surfaces **13, 16** are arranged to present displayable entities associated to the graphical representation of the PFD irrespective of the selection from the at least one operator.

In one example a display content module is provided in the avionics control system **1.** The display content module may be implemented as part of the mode control unit **17.** The display content module may be arranged to register the definition files available to each flight display **2, 3.** The display content module may be arranged to determine the associated client system **C1-CN** and the respective functionality associated to the respective client system **C1-CN** from the registered definition files. The information from the registered definition files may then be compiled and subsequently used to provide basis for the selection by means of the mode control unit **17** of desired display content provided to the at least one operator.

In one example an event concentration unit **18** is provided in the avionics control system **1.** The event concentration unit **18** is arranged to receive all data messages via the communication bus **4** related to user inputs, also referred to as events from a plurality of flight displays **2, 3.** The display server of each flight display **2, 3** may be arranged to transmit all data messages related to the events to the event concentration unit **18.** Upon receipt of the data messages related to user inputs, the event concentration unit **18** may be arranged to detect an identity of the intended receiving client system **C1-CN** associated to the data message and to forward the respective data message to the correct client system **C1-CN.** The event concentration unit **18** may be a centralized unit implemented in software. The event concentration unit **18** may in one example be arranged to identify the client system **C1-CN** associated to the respective instantiated displayable entity issuing the event based on information provided in the data message on basis of ARINC 661 protocol. The event concentration unit **18** may further be arranged to reside inside the FCC **5.**

The concentration unit **18** may in one example be arranged prioritize between user inputs, with origin from user interaction with one and the same instantiated displayable entity, duplicated to several flight displays **2, 3.** Said prioritization may be based on order of message arrival or statically assigned priorities assigned to different flight displays **2, 3** intended for a pilot and a copilot.

By implementing the event concentration unit **18,** user interactions may be correctly transmitted to the associated client system **C1-CN** irrespective of the number of available flight displays, client systems **C1-CN** and/or the number of operators.

In one example the client systems **C1-CN** may be hosted on at least one avionics computer compliant with ARINC 653, specifications. The client systems **C1-CN** and/or event concentration unit **18** and mode control unit **17** may further be hosted on separate partitions of the at least one avionics computer such as the FCC **5.**

In one example, the above described functions related to the processing devices **11, 14** and the respective memory **12, 15** may reside in separate partitions of the at least one avionics computer, compliant with ARINC 653, specifications.

In one example an emergency display mode may be provided in the control system **1.** The emergency display mode can be arranged to modify the appearance of displayable entities of a least one of the flight displays **2, 3.**

The emergency mode may be arranged to modify the appearance of the flight displays **2, 3** to correspond to a minimum set of flight control surfaces and supervision functions required for continued vehicular operation, in case of a display failure. The emergency mode may further be arranged to modify the appearance of displayable entities of a least one of the flight displays **2, 3** irrespective of the visible display objects prior to activation.

The emergency mode can manually be activated by a pilot pressing an activation button in response to detecting failure of one or more of the flight displays **2, 3.** Alternatively the emergency mode may be activated automatically by the control system **1** detecting a fault condition.

To provide for a safe implementation of the emergency mode, it may be implemented in software as a separate emergency partition of an ARINC 653 compliant computing system such as on the FCC **5** or alternatively implemented in dedicated hardware. The emergency mode may further be provided with a separate communication link to associated avionics subsystems providing necessary minimum set of flight control and supervision functions. The separate communication link may be point to point links such as RS-485 or ARINC 429. By activating the emergency mode a switchover to the separate emergency partition and respective separate communication link is made i.e. communication, hardware and/or software related failures are circumvented, by means of using different hardware and software.

In one example the avionics control system **1** may be configured to be compatible with industry standard specifications such as the ARINC 661, cockpit display interface specifications.

In one example the processing devices **11, 14** may comprise a non-volatile memory, a data processing device such as a microprocessor and a read/write memory. The non-volatile memory has a first memory portion wherein a computer program, such as an operating system, is stored for controlling the function of the system **1.** Further, the processing device **11, 14** comprises a bus controller, a serial communication port, I/O-means, an A/D-converter, a time date entry and transmission unit, an event counter and an interrupt controller. The non-volatile memory also has a second memory portion.

A computer program comprising routines for controlling the system **1** of an aerial vehicle is provided. The program may be stored in an executable manner or in a compressed state in a separate memory and/or in the read/write memory.

When it is stated that the data processing device performs a certain function it should be understood that the data processing device performs a certain part of the program which is stored in separate memory, or a certain part of the program which is stored in read/write memory.

The data processing device may communicate with a data port by means of a first data bus. The non-volatile memory is adapted for communication with the data processing device via a second data bus. The separate memory is adapted to communicate with data processing device via a third data bus. The read/write memory is adapted to communicate with the data processing device via a fourth data bus.

When data is received on the data port it is temporarily stored in the second memory portion. When the received input data has been temporarily stored, the data processing device is set up to perform execution of code in a manner described above. According to one example, data received on the data port comprises information regarding properties associated to instances of displayable entities from the flight management computer **5** and/or configuration data from the memory storage device **12, 15** and/or user inputs from the user input device **10.** This information can be used by the processing device **11, 14** so as to provide each of a plurality of flight displays **2, 3** with updated parameters associated with properties of instantiated displayable entities and to provide modification of display content and/or layout during system run-time as described above.

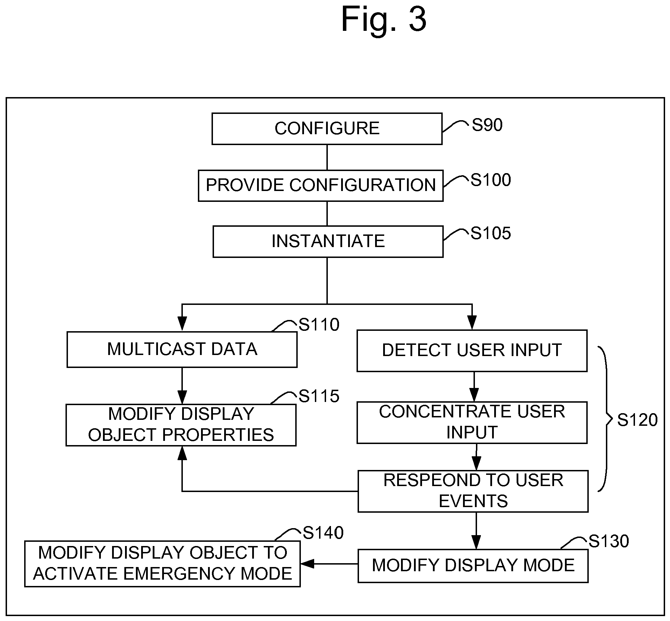

An example of the invention relates to a computer programme comprising a programme code for performing the method steps depicted with reference to **fig. 3****,** when the computer programme is run on a computer.

An example of the invention relates to a computer programme product comprising a program code stored on computer-readable media for performing the method steps depicted with reference to **fig. 3****,** when the computer programme is run on the computer.

An example of the invention relates to a computer programme product directly storable in an internal memory of a computer, comprising a computer programme for performing the method steps depicted with reference to **fig. 3****,** when the computer programme is run on the computer.

**Fig. 3** schematically illustrates an example of a control method for a vehicular system. This example relates to provide a plurality of flight displays **2, 3** each containing displayable entities with continuously updated parameters and to provide means for run-time modification of display content and/or layout.

In a first method step **s90** display content is configured off-line by defining a set of displayable entities, constituting a library of displayable entities. The display content are further configured by providing display layers **L1-L3,** defined by definition files comprising a number of references with associated initial properties to displayable entities defined by the library of displayable entities. Each layer are further associated to one client system **C1-CN** each. After the method step **s90** a subsequent method step **s100** is performed.

In the method step **s100** information are provided to the memory **12, 15** by upload of the library of predetermined displayable entities and the display configuration files. After the method step **s100** a subsequent method step **s105** is performed.

In the method step **s105** the information provided by the at least one definition file and the predetermined library of displayable entities stored in the memory are processed by the processing device **11, 14** i.e. instances of the displayable entities as described by the predetermined library of displayable entities are created according to the configurations provided by each of the definition files. After the method step **s105** a subsequent method step **s110** is performed.

In the method step **s110** data from the at least one control module **C1-CN** is transmitted based on point-to-multipoint communication to a plurality of display means **2, 3,** in response to changes in the at least one parameter of the at least one control module **C1-CN.** After the method step **s110** a subsequent method step **s115** is performed.

In the method step **s115** instances of the objects are modified in each of the plurality of the flight displays on basis of the received data from the at least one client system **C1-CN.** After the method step **s115** the method step **s110** is repeated to continuously update properties of the instanced displayable entities.

In one example the method step **s110** of transmitting data data from the at least one control module **C1-CN** to a plurality of flight displays **2, 3,** is performed in response to changes in at least one parameter of the at least one client system **C1-CN** and/or on a periodic basis.

In one example, a further method step **s120** is performed. In the method step **s120** data messages related to user input are transmitted by means of the display server and subsequently received in the event concentration unit **18.** An intended receiving client system **C1-CN** is detected from received data messages by the event concentration unit **18** controlling the identity associated to one of the client system **C1-CN** of the instanced displayable entity issuing the user input as a result of the at least one operator interacting with said displayable entity instance. The data message is then forwarded to the detected intended receiving client system **C1-CN** in order for the client system **C1-CN** to respond according to its predetermined logics.

In one example, a further method step **s130** is performed. In the method step **s130** the configuration files available to the plurality of flight displays **2, 3** are detected by means of display content control means. The at least one operator of the system is then provided with means to select display content provided by display mode selection means **17.** The respective instanced displayable objects associated to the detected available configuration files are then presented on basis of the selected display content in each of the plurality of flight displays **2, 3** and/or on the respective flight display **2, 3** where the selection were performed.

In one example, a further method step **s140** is performed. In the method step **s140** an emergency mode is activated in response to detecting a malfunction in the control system **1.** The emergency mode is activated in order to present objects related to a minimum set of flight control surfaces and supervision functions required for continued vehicular operation in the at least one flight display **2, 3.**

Many modifications and variations will be apparent to practitioners skilled in the art without departing from the scope of the invention as defined in the appended claims. The examples were chosen and described in order to best explain the principles of the invention and its practical application.

## Claims

1. A vehicular control system (1), the system comprising:
display means (2, 3), each comprising a physical display unit (13, 16) and memory means (12, 15) comprising information related to descriptions of a plurality of displayable entities and a first definition file, associated to a first user application (C1-CN), said first definition file comprising information on configuration of the displayable entities, based on references to the descriptions of the plurality of displayable entities,
**characterized in that**
the system comprises a plurality of display means (2, 3),
the memory means (12, 15) of each display means (2, 3) is provided with a copy of the first definition file,
the memory means of each display means (2, 3) is further provided with a copy of at least a second definition file, associated to at least a second user application (C1-CN),
the first and second user applications (C1-CN) are arranged to transmit data based on point-to-multipoint communication to each of the plurality of display means (2, 3),
the plurality of display means (2, 3) each comprises processing means (11, 14) operatively coupled to said memory means (12, 15), said processing means (11, 14) arranged to process the entities based on received data from the first and second user applications (C1-CN), and to present the result of the processing on the physical display unit (13, 16) of each of the display means (2, 3), and
wherein the system further comprises
display content control means arranged to detect the first and at least second definition files available to the plurality of display means (2, 3) and display mode selection means (17) arranged to provide an operator of the system (1) with means to activate or deactivate visualization associated to each of the available definition files, in each of the plurality of display means (2, 3).

2. The system (1) according to claim 1, the processing means (11, 14) of each display means (2, 3) further are arranged to superposition the entities, associated by the first and the at least second definition files respectively with the first and the at least second user application (C1-CN), on basis of predetermined hierarchical parameters associated to the first and the at least second definition files.

3. The system (1) according to any of claims 1-2, wherein the system comprises user input means (10), allowing a user to interact with the system.

4. The system (1) according to claim 3, wherein the system comprises interaction control means (18) arranged to receive user inputs related to at least one of the entities and to forward the user inputs to the respective user application (C1-CN) associated to the respective entity based on the first and at least second definition files.

5. The system (1) according to any of claims 1-4, wherein the system comprises an emergency mode arranged to modify at least one display means (2, 3), in order to present entities related to a minimum set of flight control surfaces and/or supervision functions required for continued vehicular operation.

6. The system (1) according to any of claims 1-5, wherein the system is conformant with ARINC 661 specifications.

7. A method for controlling a vehicular system (1), the method comprising the steps of:
- providing information to the display means (2, 3) related to a plurality of displayable entities,
- providing information related to configuration of the entities by means of creating a first definition file associated with a first user application (C1-CN), based on references to the descriptions of the plurality of displayable entities,
**characterized by** the further steps of:
- providing each of a plurality of display means (2, 3) with a copy of the first definition file,
providing the memory means (12, 15) in each of a plurality of display means (2, 3) with a copy of at least a second definition file associated with at least a second user application (C1-CN),
- processing the information provided to the display means (2, 3) in order to provide instances of the displayable entities,
- transmitting data from the first and second user applications (C1-CN) based on point-to-multipoint communication to a plurality of display means (2, 3), and
- modifying parameters of the provided instances of the displayable entities in each user applications (C1-CN),
- detecting the first and the at least second definition file available to the plurality of display means (2, 3) by means of display content control means,
- compiling the display content into a plurality of selectable display modes, based on the detection of the definition file,
- providing an operator of the system (1) with means (10) to select display content provided by display mode selection means (17),
- presenting the entities associated to the detected available definition files, in each of the plurality of display means (2, 3) on the basis of the selected display content.

8. The method according to claim 7, **characterized in that** the step of transmitting data from the first user application (C1-CN) based on point-to-multipoint communication to a plurality of display means (2, 3), being performed in response to changes in at least one parameter of the first user application and/or on a periodic basis.

9. The method according to any of claims 7-8, **characterized by** the further steps of:
- receiving data related to user input in an interaction control means (18),
- detecting in the received data an intended receiving user application (C1-CN), based on the first and at least second definition file,
- forwarding the data message to the intended receiving user application (C1-CN), in order for the user application (C1-CN) to respond accordingly.

10. The method according to any of claims 7-9, **characterized by** the further step of:
- activating an emergency mode in response to detection of malfunction, wherein the display content of at least one of the plurality of display means (2, 3) is modified so as to present entities related to a minimum set of flight control surfaces and/or supervision functions required for continued vehicular operation.

11. A computer program comprising a program code for performing the method steps of any of claims 7-10, when said computer program is run on a computer.

12. A computer program product stored on a computer readable media for performing the method steps of any of claims 7-10, when the computer program is run on the computer.

## Patentansprüche

1. Steuersystem für ein Fahrzeug (1), wobei das System umfasst:
Anzeigemittel (2, 3), jeweils umfassend eine physische Anzeigeeinheit (13, 16) und Speichermittel (12, 15) umfassend Informationen in Bezug auf Beschreibungen einer Vielzahl von anzeigbaren Einheiten, und eine mit einer ersten Benutzeranwendung (C1-CN) verknüpfte erste Definitionsdatei, wobei die erste Definitionsdatei Informationen über Konfiguration der anzeigbaren Einheiten umfasst, auf Grundlage von Referenzen zu den Beschreibungen der Vielzahl von anzeigbaren Einheiten,
**dadurch gekennzeichnet, dass**
das System eine Vielzahl von Anzeigemitteln (2, 3) umfasst,
das Speichermittel (12, 15) jedes Anzeigemittels (2, 3) mit einer Kopie der ersten Definitionsdatei bereitgestellt ist,
das Speichermittel jedes Anzeigemittels (2, 3) ferner mit einer Kopie mindestens einer zweiten Definitionsdatei bereitgestellt ist, verknüpft mit mindestens einer zweiten Benutzeranwendung (C1-CN),
wobei die ersten und zweiten Benutzeranwendungen (C1-CN) angeordnet sind, um Daten zu übermitteln, auf Grundlage von Punkt-zu-Mehrpunkt-Kommunikation, an jedes der Vielzahl von Anzeigemitteln (2, 3),
die Vielzahl von Anzeigemitteln (2, 3) jeweils Verarbeitungsmittel (11, 14) umfasst, die operativ mit den Speichermitteln (12, 15) verbunden sind, wobei die Verarbeitungsmittel (11, 14) dazu angeordnet sind, die Einheiten auf Grundlage von empfangenen Daten von den ersten und zweiten Benutzeranwendungen (C1-CN) zu verarbeiten und die Resultate der Verarbeitung auf der physischen Anzeigeeinheit (13, 16) jedes der Anzeigemittel (2, 3) zu präsentieren, und worin das System ferner umfasst
Mittel zum Steuern der Anzeige von Inhalten, angeordnet zum Erfassen der ersten und mindestens zweiten Definitionsdateien, die für die Vielzahl von Anzeigemitteln (2, 3) verfügbar sind, und Mittel zur Auswahl des Anzeigemodus (17), die zum Bereitstellen von Mitteln zum Aktivieren oder Deaktivieren von mit den jeweiligen verfügbaren Definitionsdateien verknüpfter Visualisierung an einen Betreiber des Systems (1) angeordnet sind, in jeder der Vielzahl von Anzeigemitteln (2, 3).

2. System (1) nach Anspruch 1, wobei die Verarbeitungsmittel (11, 14) jedes Anzeigemittels (2, 3) ferner dazu angeordnet sind, die Einheiten zu überlagern, jeweils verknüpft mit der ersten und der mindestens zweiten Benutzeranwendung (C1-CN) durch die ersten und die mindestens zweiten Definitionsdateien, auf Grundlage von mit den ersten und den mindestens zweiten Definitionsdateien verknüpften vordefinierten hierarchischen Parametern.

3. System (1) nach einem der Ansprüche 1 bis 2, worin das System Benutzereingabemittel (10), umfasst, die einen Benutzer mit dem System interagieren lassen.

4. System (1) nach Anspruch 3, worin das System Interaktionssteuermittel (18) umfasst, die angeordnet sind, um Benutzereingaben in Bezug auf mindestens eine der Einheiten zu empfangen und die Benutzereingaben an die mit der jeweiligen Einheit verknüpften jeweilige Benutzeranwendung (C1-CN) weiterzuleiten, auf Grundlage der ersten und mindestens zweiten Definitionsdateien.

5. System (1) nach einem der Ansprüche 1 bis 4, worin das System einen Notmodus umfasst, der angeordnet ist, um mindesten ein Anzeigemittel (2, 3) zu modifizieren, um Einheiten zu präsentieren, in Bezug auf ein Mindestsatz an Flugsteuerflächen und/oder Überwachungsfunktionen, die zum fortgesetzten Betrieb des Fahrzeugs notwendig sind.

6. System (1) nach einem der Ansprüche 1 bis 5, worin das System Spezifikationen nach ARINC 661 erfüllt.

7. Verfahren zur Steuerung eines Fahrzeugsystems (1), wobei das Verfahren die Schritte umfasst:
- Bereitstellen von Informationen an die Anzeigemittel (2, 3) in Bezug auf eine Vielzahl von anzeigbaren Einheiten,
- Bereitstellen von Informationen in Bezug auf die Konfiguration der Einheiten durch das Schaffen einer mit einer ersten Benutzeranwendung (C1-CN) verknüpften ersten Definitionsdatei auf Grundlage von Referenzen auf Beschreibungen der Vielzahl von anzeigbaren Einheiten,
**gekennzeichnet durch** die weiteren Schritte:
- Bereitstellen einer Kopie der ersten Definitionsdatei an jedes einer Vielzahl von Anzeigemitteln (2, 3),
- Bereitstellen einer Kopie mindestens einer, mit mindestens einer zweiten Benutzeranwendung (C1-CN) verknüpften, zweiten Definitionsdatei an die Speichermittel (12, 15) in jedem einer Vielzahl von Anzeigemitteln (2, 3),
- Verarbeiten der an die Anzeigemittel (2, 3) bereitgestellten Informationen, um Instanzen der anzeigbaren Einheiten bereitzustellen,
- Übermitteln von Daten von den ersten und zweiten Benutzeranwendungen (C1-CN), auf Grundlage von Punkt-zu-Mehrpunkt-Kommunikation, an eine Vielzahl von Anzeigemitteln (2, 3), und
- Modifizieren von Parametern der bereitgestellten Instanzen der anzeigbaren Einheiten in jeden Benutzeranwendungen (C1-CN),
- Detektieren der ersten und der mindestens zweiten für die Vielzahl von Anzeigemitteln (2, 3) verfügbaren Definitionsdatei durch Mittel zum Steuern der Anzeige von Inhalten,
- Zusammenstellen des Anzeigeinhalts in eine Vielzahl von auswählbaren Anzeigemodi auf Grundlage der Detektion der Definitionsdatei,
- Bereitstellen von Mitteln (10) zum Auswählen von Anzeigeinhalten, bereitgestellt durch Mittel zur Auswahl des Anzeigemodus (17) an einen Benutzer des Systems (1),
- Präsentieren der mit den detektierten verfügbaren Definitionsdateien verknüpften Einheiten auf jeder der Vielzahl von Anzeigemitteln (2, 3) auf Grundlage des ausgewählten Anzeigeinhalts.

8. Verfahren nach Anspruch 7, **dadurch gekennzeichnet, dass** der Schritt des Übermittelns von Daten von der ersten Benutzeranwendung (C1-CN), auf Grundlage von Punkt-zu-Mehrpunkt-Kommunikation, an eine Vielzahl von Anzeigemitteln (2, 3), als Reaktion auf Änderungen von mindestens einem Parameter der ersten Benutzeranwendung und/oder einer periodischen Grundlage ausgeführt wird.

9. Verfahren nach einem der Ansprüche 7 bis 8, **gekennzeichnet durch** die weiteren Schritte:
- Empfangen von Daten in Bezug auf Benutzereingabe in einem Interaktionssteuermittel (18),
- Detektieren, in den empfangenen Daten, eines geplanten Empfangens von Benutzeranwendungen (C1-CN) auf Grundlage der ersten und mindestens zweiten Definitionsdatei,
- Weiterleiten der Datenmeldung an die vorgesehene Benutzeranwendung (C1-CN), damit die Benutzeranwendung (C1-CN) entsprechend reagiert.

10. Verfahren nach einem der Ansprüche 7 bis 9, **gekennzeichnet durch** den weiteren Schritt:
- Aktivieren eines Notmodus als Reaktion auf die Detektion einer Fehlfunktion, worin die Anzeigeinhalte des mindestens einen der Vielzahl von Anzeigemitteln (2, 3) modifiziert wird, um Einheiten zu präsentieren, in Bezug auf ein Mindestsatz an Flugsteuerflächen und/oder Überwachungsfunktionen, die zum fortgesetzten Betrieb des Fahrzeugs notwendig sind.

11. Computerprogramm, das einen Programmcode zum Durchführen der Verfahrensschritte nach einem der Ansprüche 7 bis 10 umfasst, wenn das Computerprogramm auf einem Computer läuft.

12. Computerprogrammprodukt, gespeichert auf einem computerlesbaren Medium, zum Durchführen der Verfahrensschritte nach einem der Ansprüche 7 bis 10, wenn das Computerprogramm auf dem Computer läuft.

## Revendications

1. Système de commande de véhicule (1), le système comprenant :
des moyens d'affichage (2, 3) comprenant chacun une unité d'affichage physique (13, 16) et un moyen de mémoire (12, 15) comprenant des informations relatives à des descriptions d'une pluralité d'entités et un premier fichier de définition associé à une première application d'utilisateur (C1-CN), ledit premier fichier de définition comprenant des informations de configuration des entités affichables, sur la base de références aux descriptions de la pluralité d'entités affichables,
**caractérisé en ce que**
le système comprend une pluralité de moyens d'affichage (2, 3),
le moyen de mémoire (12, 15) de chaque moyen d'affichage (2, 3) est muni d'une copie du premier fichier de définition,
le moyen de mémoire de chaque moyen d'affichage (2, 3) est en outre pourvu d'une copie d'au moins un deuxième fichier de définition associé à au moins une deuxième application d'utilisateur (C1-CN),
les première et deuxième applications d'utilisateur (C1-CN) sont agencées pour transmettre des données basées sur une communication point à multipoint avec chacun de la pluralité de moyens d'affichage (2, 3),
la pluralité de moyens d'affichage (2, 3) comprenant chacun un moyen de traitement (11, 14) couplé de manière opérationnelle audit moyen de mémoire (12, 15), ledit moyen de traitement (11, 14) étant conçu pour traiter les entités sur la base des données reçues des première et deuxième applications d'utilisation (C1-CN), et pour présenter le résultat du traitement sur l'unité d'affichage physique (13, 16) de chacun des moyens d'affichage (2, 3), et dans lequel le système comprend en outre un moyen de commande de contenu d'affichage conçu pour détecter les première et au moins deuxième fichiers de définition disponibles pour la pluralité de moyens d'affichage (2, 3) et un moyen de sélection de mode d'affichage (17) conçu pour fournir à un opérateur du système (1) des moyens pour activer ou désactiver la visualisation associée à chacune des fichiers de définition disponibles, dans chacun de la pluralité de moyens d'affichage (2, 3).

2. Système (1) selon la revendication 1, dans lequel les moyens de traitement (11, 14) de chaque moyen d'affichage (2, 3) sont en outre agencés pour superposer les entités, associées par respectivement les premier et au moins deuxième fichiers de définition aux première et au moins deuxième applications d'utilisateur (C1-CN), sur la base de paramètres hiérarchiques prédéterminés associés aux première et au moins deuxième fichiers de définition.

3. Système (1) selon l'une quelconque des revendications 1 à 2, dans lequel le système comprend un moyen d'entrée d'utilisateur (10), permettant à un utilisateur d'interagir avec le système.

4. Système (1) selon la revendication 3, dans lequel le système comprend un moyen de commande d'interaction (18) conçu pour recevoir des entrées d'utilisateur liées à au moins une des entités et pour transmettre les entrées d'utilisateur à l'application d'utilisateur respective (C1-CN) associée à l'entité respective sur la base des premier et au moins deuxième fichiers de définition.

5. Système (1) selon l'une quelconque des revendications 1 à 4, dans lequel le système comprend un mode d'urgence conçu pour modifier au moins un moyen d'affichage (2, 3), afin de présenter des entités liées à un ensemble minimal de surfaces de commande de vol et / ou fonctions de supervision requises pour la poursuite de fonctionnement véhiculaire.

6. Système (1) selon l'une quelconque des revendications 1 à 5, dans lequel le système est conforme aux spécifications ARINC 661.

7. Procédé de commande d'un système véhiculaire (1), le procédé comprenant les étapes consistant à :
- fournir des informations aux moyens d'affichage (2, 3) relatives à une pluralité d'entités affichables,
- fournir des informations relatives à la configuration des entités au moyen de la création d'un premier fichier de définition associée à une première application d'utilisateur (C1-CN), sur la base de références aux descriptions de la pluralité d'entités affichables,
**étant caractérisé par** les étapes supplémentaires :
- fournir à chacun de la pluralité de moyens d'affichage (2, 3) une copie du premier fichier de définition,
- fournir au moyen de mémoire (12, 15) dans chacun d'une pluralité de moyens d'affichage (2, 3) une copie d'au moins un deuxième fichier de définition associé à au moins une deuxième application d'utilisateur (C1-CN),
- traiter les informations fournies aux moyens d'affichage (2, 3) afin de fournir des instances des entités affichables,
- transmettre des données depuis les première et deuxième applications d'utilisateur (C1-CN) basées sur une communication point à multipoint á une pluralité de moyens d'affichage (2, 3), et
- modifier des paramètres des instances fournies des entités affichables dans chaque application d'utilisateur (C1-CN),
- détecter les premier et au moins deuxième fichiers de définition disponibles pour la pluralité de moyens d'affichage (2, 3) au moyen d'un moyen de commande de contenu d'affichage,
- compiler le contenu d'affichage en une pluralité de modes d'affichage sélectionnables, sur la base de la détection du fichier de définition,
- fournir à un opérateur du système (1) un moyen (10) pour sélectionner un contenu d'affichage fourni par un moyen de sélection de mode d'affichage (17),
- présenter les entités associées aux fichiers de définition disponibles détectés dans chacun de la pluralité de moyens d'affichage (2, 3) sur la base du contenu d'affichage sélectionné.

8. Procédé selon la revendication 7, **caractérisé en ce que** l'étape consistant à transmettre des données de la première application d'utilisateur (C1-CN) sur la base d'une communication point à multipoint à une pluralité de moyens d'affichage (2, 3) est effectuée en réponse à des modifications d'au moins un paramètre de la première application d'utilisateur et / ou de façon périodique.

9. Procédé selon l'une quelconque des revendications 7 à 8, **caractérisé en ce qu'**il comprend en outre les étapes consistant à :
- recevoir des données relatives à une entrée d'utilisateur dans un moyen de commande d'interaction (18),
- détecter dans les données reçues une application d'utilisateur de réception prévue (C1-CN), sur la base des premier et au moins deuxième fichiers de définition,
- transmettre le message de données à l'application d'utilisateur de réception prévue (C1-CN), afin que l'application d'utilisateur (C1-CN) réponde en conséquence.

10. Procédé selon l'une quelconque des revendications 7 à 9, **caractérisé en ce qu'**il comprend en outre les étapes consistant à :
- activer un mode d'urgence en réponse à la détection d'un défaut de fonctionnement, le contenu d'affichage d'au moins l'un de la pluralité de moyens d'affichage (2, 3) étant modifié de manière à présenter des entités se rapportant à un ensemble minimal de surfaces de commande de vol et / ou de fonctions de supervision requises pour la poursuite de fonctionnement véhiculaire.

11. Programme d'ordinateur comprenant un code de programme pour exécuter les étapes de procédé selon l'une quelconque des revendications 7 à 10, lorsque ledit programme informatique est exécuté sur un ordinateur.

12. Produit-programme informatique stocké sur un support lisible par ordinateur pour exécuter les étapes de procédé selon l'une quelconque des revendications 7 à 10, lorsque ledit programme informatique est exécuté sur l'ordinateur.
